# EUROPEAN PATENT APPLICATION

(11) **EP 4 604 427 A1**
(43) Date of publication of application: **20.08.2025**
(21) Application number: 23877115.8
(22) Date of filing: 25.09.2023
(51) Int. Cl.: H04J 99/00, G08C 15/00, G08C 17/00, H04B 1/69, H04J 4/00, H04W 72/0446, H04W 72/0453

(54) **TRANSMISSION DEVICE, TRANSMISSION METHOD, RECEPTION DEVICE, AND RECEPTION METHOD**

(30) Priority: 13.10.2022 JP 2022164765
(71) Applicant: Sony Group Corporation, Tokyo 108-0075 (JP)
(72) Inventor: SATO Masanori, Tokyo 108-0075 (JP)
(74) Representative: Witte, Weller & Partner Patentanwälte mbB
(86) International application number: PCT/JP2023/034648
(87) International publication number: WO 2024/080109

(57) **Abstract**

The present technology relates to a transmission device and a transmission method, and a reception device and a reception method that enable more efficient multiplexing of signals.

A communication device performs control to multiplex and transmit a plurality of chirp signals generated by performing chirp modulation on transmission data and shifting a transmission frequency between the center frequencies of adjacent transmission channels. The present technology can be applied to wireless communication systems.

## Description

### TECHNICAL FIELD

The present technology relates to a transmission device and a transmission method, and a reception device and a reception method, and more particularly, to a transmission device and a transmission method, and a reception device and a reception method that are designed to be capable of more efficiently multiplexing signals.

### BACKGROUND ART

In the Internet of things (IoT), it is expected that information about mountains and oceans, which is difficult to obtain in a conventional manner, can be easily acquired. It is expected that it will be possible to grasp environmental changes and prevent disasters by performing observations by the IoT.

On the other hand, the number of terminals is expected to be smaller in a mountainous area or the like than in an urban area, and therefore, the costs of installing and operating a receiving station is larger. Further, it is difficult to install a receiving station on the sea or the like.

In view of this, a wireless system mainly using a satellite receiving station in which a receiving station is mounted on a low-earth-orbit satellite is being studied. Reality of such a wireless system is increasing because of the advent of the wireless technology for the IoT capable of long-distance communication, the reduction in the cost of launching small satellites, and the like.

By constructing a wireless system in which a ground receiving station and a satellite receiving station are combined, it is possible to construct a wireless system capable of acquiring information from any place on the earth at low cost.

### CITATION LIST

### PATENT DOCUMENT

Patent Document 1: WO 2017/212810 A

### SUMMARY OF THE INVENTION

### PROBLEMS TO BE SOLVED BY THE INVENTION

However, as the service area expands due to combination of a ground receiving station and a satellite receiving station, an increase in the number of terminals is expected. With an increase in the number of terminals, signals need to be multiplexed more efficiently.

Patent Document 1 discloses a method of multiplexing in the same channel by shifting in the time axis direction, but has not suggested any technique related to shifting in the frequency axis direction.

The present technology has been made in view of such circumstances, and aims to enable more efficient multiplexing of signals.

### SOLUTIONS TO PROBLEMS

A transmission device according to one aspect of the present technology includes a transmission control unit that performs control to multiplex and transmit a plurality of chirp signals generated by performing chirp modulation on transmission data and shifting a transmission frequency between center frequencies of adjacent transmission channels.

A reception device according to another aspect of the present technology includes a reception control unit that performs control to receive a plurality of multiplexed and transmitted chirp signals generated by performing chirp modulation on transmission data and shifting a reception frequency between center frequencies of adjacent reception channels.

In one aspect of the present technology, control is performed to multiplex and transmit a plurality of chirp signals generated by performing chirp modulation on transmission data and shifting the transmission frequency between the center frequencies of adjacent transmission channels.

In another aspect of the present technology, control is performed to receive a plurality of multiplexed and transmitted chirp signals generated by performing chirp modulation on transmission data and shifting the reception frequency between the center frequencies of adjacent reception channels.

### BRIEF DESCRIPTION OF DRAWINGS

Fig. 1 is a diagram illustrating an example configuration of a wireless communication system according to an embodiment of the present technology.
Fig. 2 is a graph illustrating a state of multiplexing in a time axis direction.
Fig. 3 is a graph illustrating a state of multiplexing in a frequency axis direction.
Fig. 4 is a graph illustrating a state of interference at transmission times matched with intervals of 8 ms in the grid time.
Fig. 5 is a graph illustrating a state of interference at transmission times matched with intervals of 8 ms + 2 ms (0.25 gp) in the grid time.
Fig. 6 is a graph illustrating a state of interference at transmission times matched with intervals of 8 ms + 4 ms (0.5 gp) in the grid time.
Fig. 7 is a graph illustrating a state of interference at transmission times matched with intervals of 8 ms + 6 ms (0.75 gp) in the grid time.
Fig. 8 is a graph illustrating a state of interference at transmission times matched with intervals of 8 ms + 8 ms (corresponding to the next interval in the grid time) in the grid time.
Fig. 9 is a graph illustrating frequency differences from the existing chirp signals depending on the transmission time of a chirp signal multiplexed in the frequency axis direction.
Fig. 10 is a block diagram illustrating an example configuration of a communication terminal in Fig. 1.
Fig. 11 is a block diagram illustrating an example configuration of a communication device in Fig. 1.
Fig. 12 is a flowchart for explaining a transmission process to be performed by the communication terminal in Fig. 10.
Fig. 13 is a flowchart for explaining a reception process to be performed by the communication device in Fig. 11.
Fig. 14 is a block diagram illustrating an example configuration of a computer.

### MODE FOR CARRYING OUT THE INVENTION

In the description below, modes for carrying out the present technology will be described. The explanation will be made in the following order.
1. Example Configuration of Wireless Communication System
2. Signal Multiplexing
3. Device Configurations and Processing
4. Others

### <1. Example Configuration of Wireless Communication System>

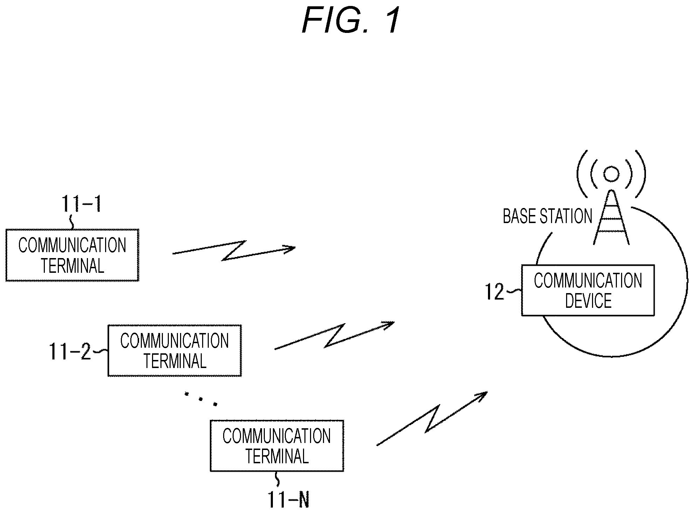

Fig. 1 is a diagram illustrating an example configuration of a wireless communication system according to an embodiment of the present technology.

A wireless communication system 1 in Fig. 1 is a wireless communication system for the Internet of Things (IoT). The wireless communication system 1 is formed with communication terminals 11-1 to 11-N and a communication device 12 of a base station that are connected by wireless communication. Note that, in the wireless communication system 1, chirp modulation is used as a method for modulating a transmission signal.

Chirp modulation is one of frequency diffusion modulation methods, and is a modulation method for changing the frequency of a primarily modulated carrier wave at continuous frequencies depending on time. Note that signals obtained by chirp modulation will be hereinafter referred to as chirp signals.

The communication terminals 11-1 to 11-N are IoT devices including one or more sensors. The communication terminals 11-1 to 11-N include at least one sensor among a camera, a microphone, an acceleration sensor, an angular velocity sensor, a geomagnetic sensor, an illuminance sensor, a temperature sensor, a humidity sensor, a moisture sensor, an optical sensor, an atmospheric pressure sensor, a positioning sensor, and the like, for example.

Hereinafter, in a case where it is not necessary to distinguish the communication terminals 11-1 to 11-N, they are collectively referred to as the communication terminal(s) 11 as appropriate.

For example, the communication terminal 11 measures a measurement target, and generates a data frame containing sensor data indicating a measurement result. The communication terminal 11 performs chirp modulation on the signal of the data frame, and transmits a plurality of chirp signals of the data frame obtained by the chirp modulation to the communication device 12.

At that time, the communication terminal 11 performs multiplexing in the time axis direction, or multiplexing in the frequency axis direction and the time axis direction. For example, as the multiplexing in the time axis direction, the communication terminal 11 multiplexes a plurality of chirp signals by shifting the transmission time (transmission timing) in the time axis direction, and transmits the result to the communication device 12. Also, as the multiplexing in the frequency axis direction and in the time axis direction, the communication terminal 11 multiplexes a plurality of chirp signals by shifting the transmission frequency in the frequency axis direction and shifting the transmission time in the time axis direction, and transmits the result to the communication device 12. The transmission frequency is the center frequency of a transmission channel (transmission frequency band) that is used for transmission.

Note that the communication terminal 11 determines the transmission wireless resources necessary for transmission of the data frame on the basis of the global navigation satellite system (GNSS) time, its own terminal ID, and the like, and performs transmission to the communication device 12 using the determined transmission wireless resources.

The transmission wireless resources include a transmission frequency, a transmission time, and the like.

The base station includes the communication device 12. The communication device 12 determines the reception wireless resources necessary for reception of the data frame on the basis of the GNSS time, the terminal ID of the communication terminal 11, and the like, and performs reception using the determined reception wireless resources.

The reception wireless resources include a reception frequency, a reception time (reception timing), and the like. The reception frequency is the center frequency of a reception channel (reception frequency band) that is used for reception.

### <2. Signal Multiplexing>

### <Multiplexing in Time Axis Direction>

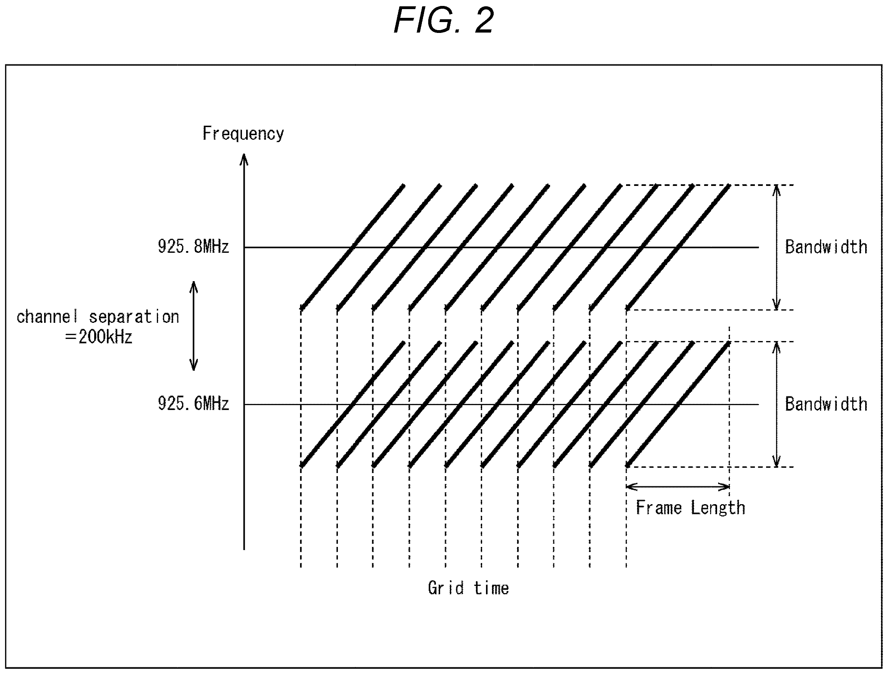

Fig. 2 is a graph illustrating a state of multiplexing in the time axis direction.

The center frequencies of channels are defined at intervals of 200 kHz by laws and regulations of the 920 MHz band in Japan.

Fig. 2 shows chirp signals multiplexed in the time axis direction in a channel having a center frequency of 925.6 MHz, and chirp signals multiplexed in the time axis direction in a channel having a center frequency of 925.8 MHz.

The chirp signals in Fig. 2 are assumed to be signals having a frame length (Frame Length) of 400 ms and a chirp modulation band (Bandwidth) of 160 kHz, for example. In this case, the chirp rate is 400 kHz/s (= Bandwidth/Frame Length). Also, an interval between grid times (Grid time) indicated by vertical dashed lines is 8 ms.

In the case in Fig. 2, 20 chirp signals are multiplexed in two channels (400 kHz).

In the laws and regulations of the 920 MHz band in Japan, the center frequencies of channels are defined at intervals of 200 kHz as described above, but a plurality of channels may be used in combination.

Specifically, two channels having a width of 200 kHz are allowed to be used as a channel having a width of 400 kHz. For example, in a case where two channels of 925.6 MHz and 925.8 MHz are used in combination, the center frequency of the channels to be used in combination is defined as 925.7 MHz. Likewise, in a case where two channels of 925.8 MHz and 926.0 MHz are used in combination, the center frequency of the channels to be used in combination is defined as 925.9 MHz.

Also, according to the laws and regulations of the 920 MHz band in Japan, an interval between center frequencies in a case where one channel is used and in a case where two channels are used in combination can be used at intervals of 100 kHz.

### <Multiplexing in Frequency Axis Direction>

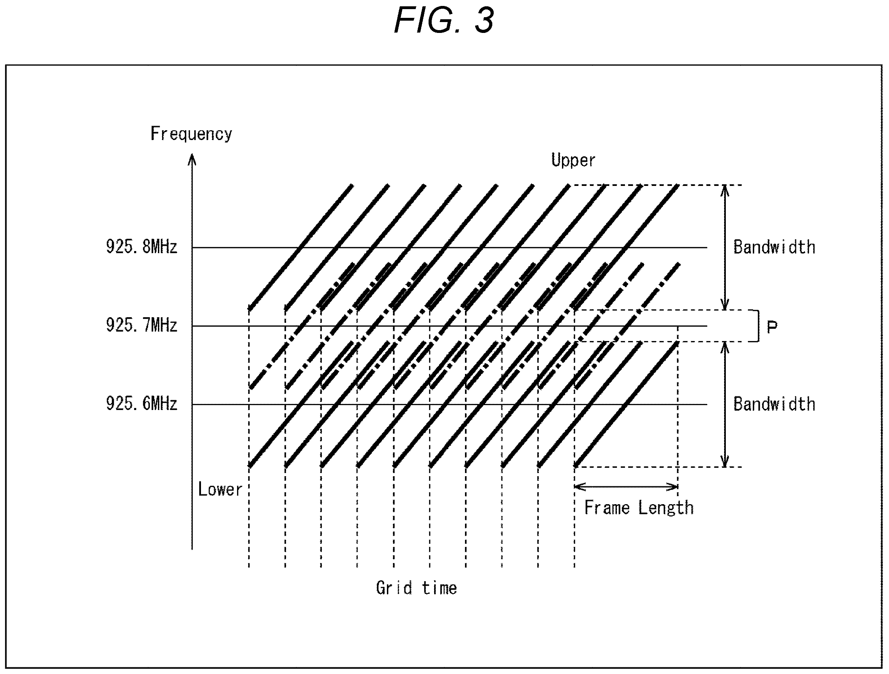

Fig. 3 is a graph illustrating a state of multiplexing in the frequency axis direction.

In Fig. 3, in addition to the two existing chirp signals (solid lines) in Fig. 2, a chirp signal that is multiplexed in the time axis direction in a channel having a center frequency of 925.7 MHz and is shifted by 100 kHz in the frequency axis direction from the center frequency of the existing chirp signals is indicated by a dot-and-dash line.

Assuming that the Bandwidth of the chirp signal is 160 kHz, there is an interval P of 40 kHz (200 kHz - 160 kHz) between the existing chirp signals (solid lines in the drawing, the channels of 925.6 MHz and 925.8 MHz being used).

By using the portion of the interval P of 40 kHz, it is possible to multiplex the new chirp signal (a dot-and-dash line in the drawing) to be newly multiplexed so that a portion (40 kHz out of 160 kHz) in the frame does not interfere with the existing chirp signals. The center frequency of the new chirp signal is the center frequency in a case where the channels of the two adjacent existing chirp signals are used in combination.

Note that, since the center frequency of the existing chirp signal of 925.8 MHz is above the center frequency of 925.7 MHz of the new chirp signal, the existing chirp signal will be hereinafter also referred to as the existing chirp signal on the upper frequency side ("Upper" in the drawings). Since the center frequency of the existing chirp signal of 925.6 MHz is below the center frequency of 925.7 MHz of the new chirp signal, the existing chirp signal will be hereinafter also referred to as the existing chirp signal on the lower frequency side ("Lower" in the drawings).

### <Transmission Time in Case of Multiplexing in Frequency Axis Direction>

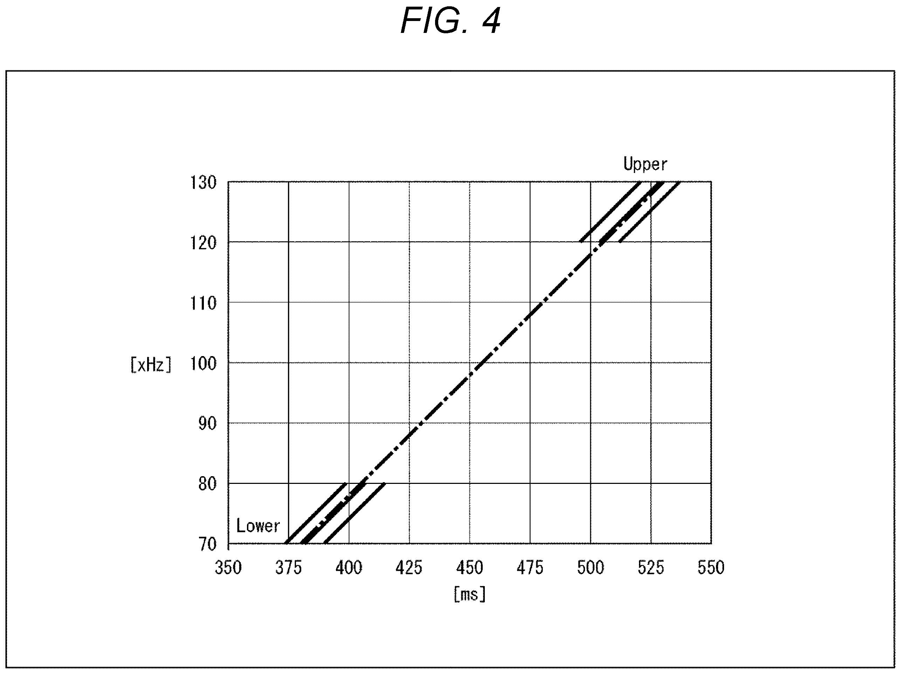

Further, the transmission time in the case of multiplexing in the frequency axis direction is described with reference to Fig. 4.

In a case where the same transmission time as the existing chirp signals is used when multiplexing is performed in the frequency axis direction as in the case in Fig. 3, the new chirp signal is close to the existing chirp signal on the upper frequency side, and might greatly interfere with the existing chirp signal on the upper frequency side. On the other hand, the newly multiplexed chirp signal does not greatly interfere with the existing chirp signal on the lower frequency side.

Therefore, control on the transmission time in the case of multiplexing in the frequency axis direction performed by the communication terminal 11 is now described.

Fig. 4 is a graph illustrating a state of interference at transmission times (transmission timings) matched with intervals of 8 ms in the grid time.

In Fig. 4, the horizontal axis indicates time [ms], and the vertical axis indicates frequency [kHz]. Further, solid lines represent the existing chirp signals, and a dot-and-dash line represents the new chirp signal multiplexed in the frequency axis direction. The same applies to the drawings that follow.

Note that, in Fig. 4, 120 kHz - 80 kHz is the above-described interval P of 40 kHz, and there are no existing chirp signals in the interval P. There is a possibility that the new chirp signal and an existing chirp signal are close to each other and interfere with each other at frequencies other than the frequencies included in the interval P, as shown at the lower left and the upper right in the drawing.

As the existing transmission time, the transmission time is discretely defined at intervals of 8 ms in the grid time, and the existing chirp signals follow the defined transmission time. In Fig. 4, the new chirp signal multiplexed in the frequency axis direction is also transmitted at the transmission time matched with the intervals of 8 ms in the grid time.

In the case in Fig. 4, the interference between the new chirp signal and the existing chirp signal on the upper frequency side, and the interference between the new chirp signal and the existing chirp signal on the lower frequency side are substantially the same.

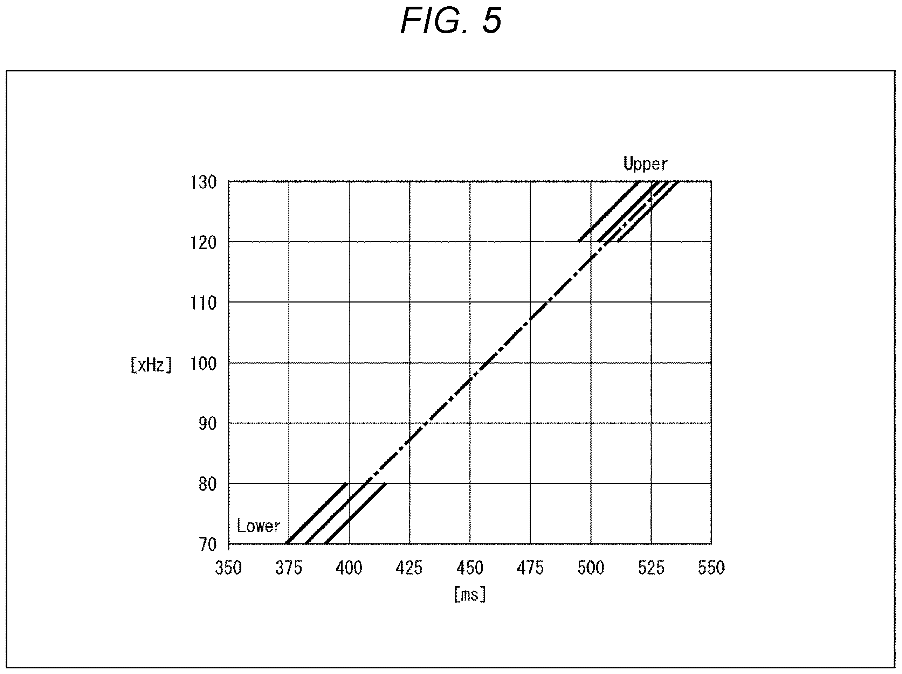

Fig. 5 is a graph illustrating a state of interference at transmission times matched with intervals of 8 ms + 2 ms (0.25 gp) in the grid time.

In Fig. 5, the new chirp signal multiplexed in the frequency axis direction is transmitted at the transmission time matched with the intervals of 8 ms + 2 ms (0.25 gp) in the grid time.

That is, in the case in Fig. 5, the transmission times are controlled to 25% (2 ms) of an interval of 8 ms in the grid time. Thus, the interference between the new chirp signal and the existing chirp signal on the lower frequency side is greater than that in the case in Fig. 4, but the interference between the new chirp signal and the existing chirp signal on the upper frequency side is smaller than that in the case in Fig. 4.

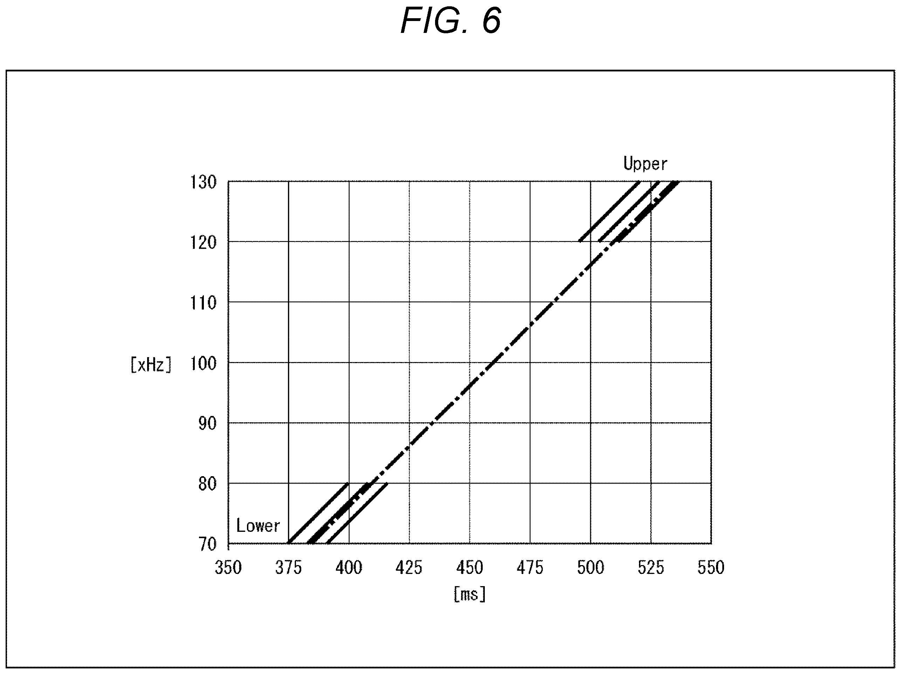

Fig. 6 is a graph illustrating a state of interference at transmission timings matched with intervals of 8 ms + 4 ms (0.5 gp) in the grid time.

In Fig. 6, the new chirp signal multiplexed in the frequency axis direction is transmitted at the transmission time matched with the intervals of 8 ms + 4 ms (0.5 gp) in the grid time.

That is, in the case in Fig. 6, the transmission times are controlled to 50% (4 ms) of an interval of 8 ms in the grid time. In the case in Fig. 6, the interference between the new chirp signal and the existing chirp signal on the upper frequency side, and the interference between the new chirp signal and the existing chirp signal on the lower frequency side are substantially the same.

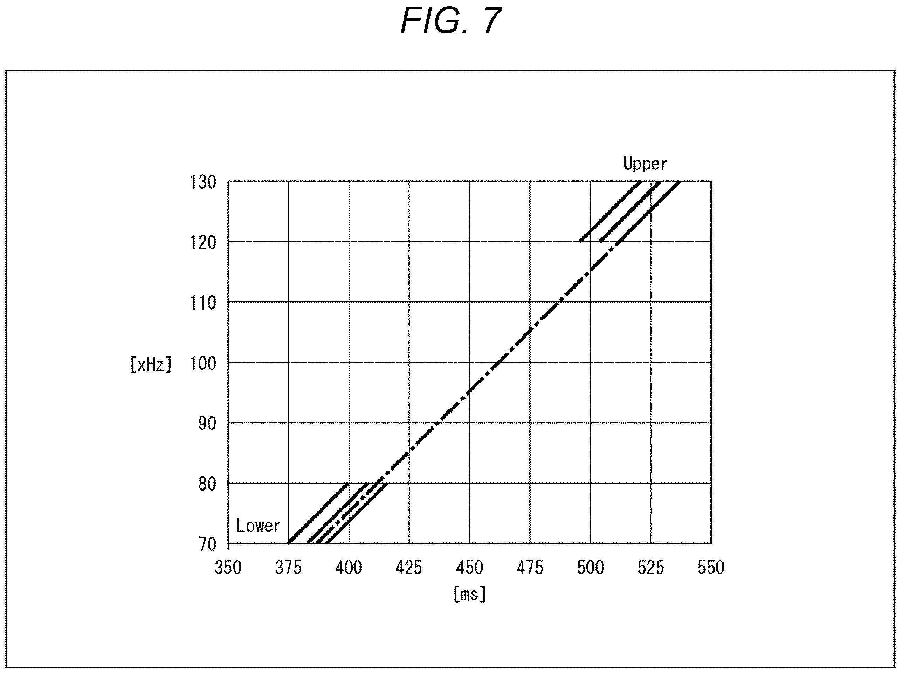

Fig. 7 is a graph illustrating a state of interference at transmission times matched with intervals of 8 ms + 6 ms (0.75 gp) in the grid time.

In Fig. 7, the new chirp signal multiplexed in the frequency axis direction is transmitted at the transmission time matched with the intervals of 8 ms + 6 ms (0.75 gp) in the grid time.

That is, in the case in Fig. 7, the transmission times are controlled to 75% (6 ms) of an interval of 8 ms in the grid time. Thus, the interference between the new chirp signal and the existing chirp signal on the upper frequency side is greater than that in the case in Fig. 4, but the interference between the new chirp signal and the existing chirp signal on the lower frequency side is smaller than that in the case in Fig. 4.

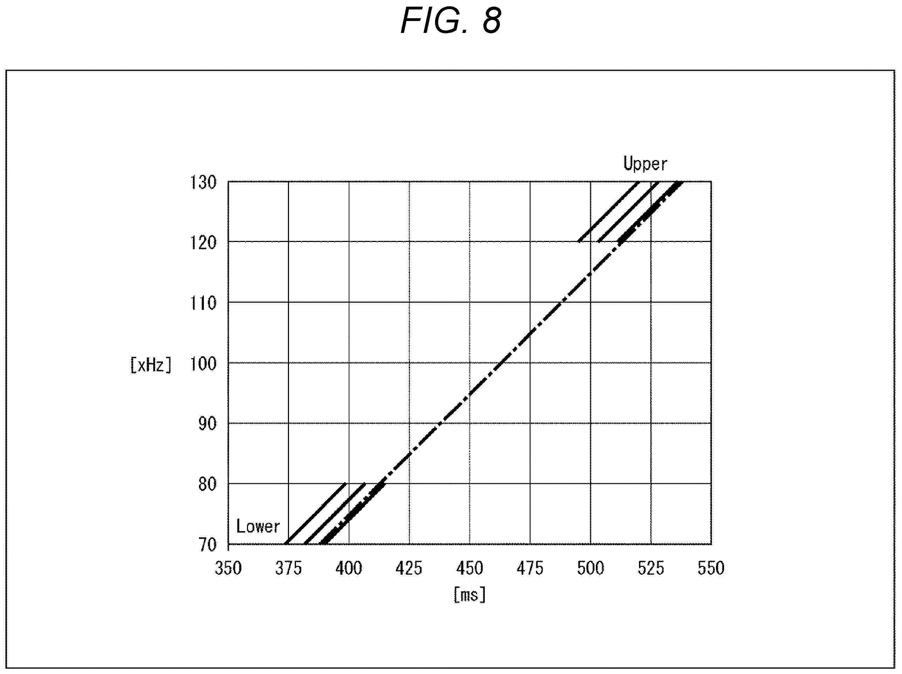

Fig. 8 is a graph illustrating a state of interference at transmission times matched with intervals of 8 ms + 8 ms (corresponding to the next interval in the grid time) in the grid time.

In Fig. 8, the new chirp signal multiplexed in the frequency axis direction is transmitted at the transmission time matched with the intervals of 8 ms + 8 ms (corresponding to the next interval in the grid time) in the grid time.

That is, in the case in Fig. 8, the transmission times are controlled to intervals of 8 ms in the grid time. In the case in Fig. 8, the interference between the new chirp signal and the existing chirp signal on the upper frequency side, and the interference between the new chirp signal and the existing chirp signal on the lower frequency side are substantially the same.

As described above with reference to Figs. 4 to 8, it is possible to control interference with the existing chirp signals by controlling the transmission time of the new chirp signal multiplexed in the frequency axis direction.

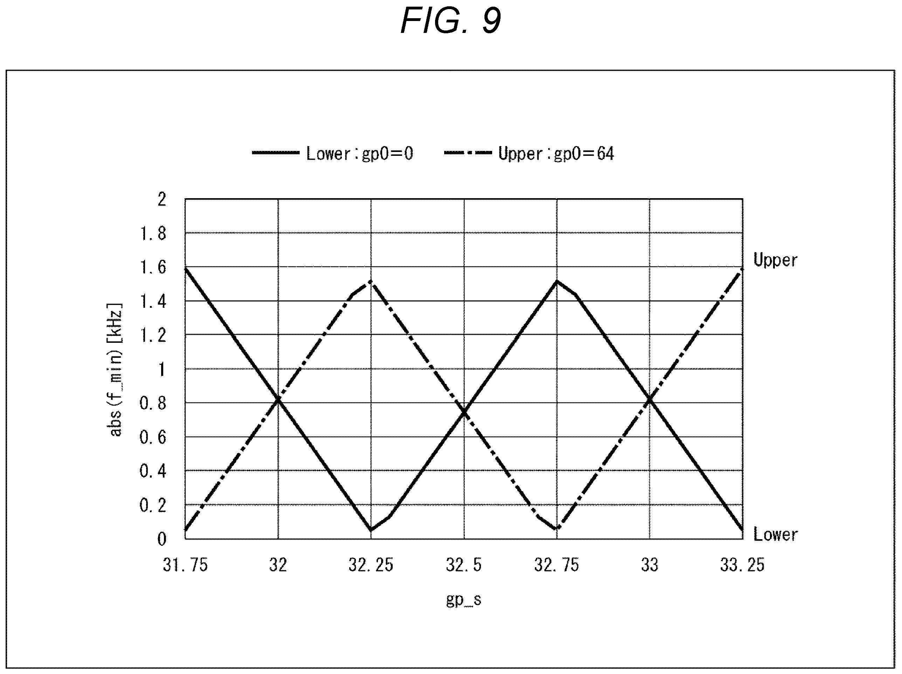

Fig. 9 is a graph illustrating frequency differences from the existing chirp signals depending on the transmission time of the new chirp signal multiplexed in the frequency axis direction.

In Fig. 9, the horizontal axis indicates time (grid timing). Normally, an integer value is selected as the adjustment value for adjusting the transmission time. The vertical axis indicates the frequency difference. The graph shows that a frequency difference of a smaller value results in a greater mutual interference. The solid line indicates the frequency difference between the new chirp signal and the existing chirp signal on the lower frequency side. The dot-and-dash line indicates the frequency difference between the new chirp signal and the existing chirp signal on the upper frequency side.

It can be seen that, as the transmission time of the new chirp signal is controlled so as to reduce the frequency difference between the new chirp signal and the existing chirp signal on the upper frequency side, the frequency difference between the new chirp signal and the existing chirp signal on the lower frequency side becomes larger.

To the contrary, as the transmission time of the new chirp signal is controlled so as to increase the frequency difference between the new chirp signal and the existing chirp signal on the upper frequency side, the frequency difference between the new chirp signal and the existing chirp signal on the lower frequency side becomes smaller.

As described above, by controlling the transmission time of the new chirp signal multiplexed in the frequency axis direction, it is possible to control the amounts of interference between the new chirp signal and the existing chirp signals, and perform more efficient multiplexing.

Note that the adjustment value such as the transmission time described above changes depending on the values of Frame Length, Bandwidth, and the intervals in the grid time, but can be controlled in a similar manner.

### <3. Device Configurations and Processing>

### <Configuration of Communication Terminal>

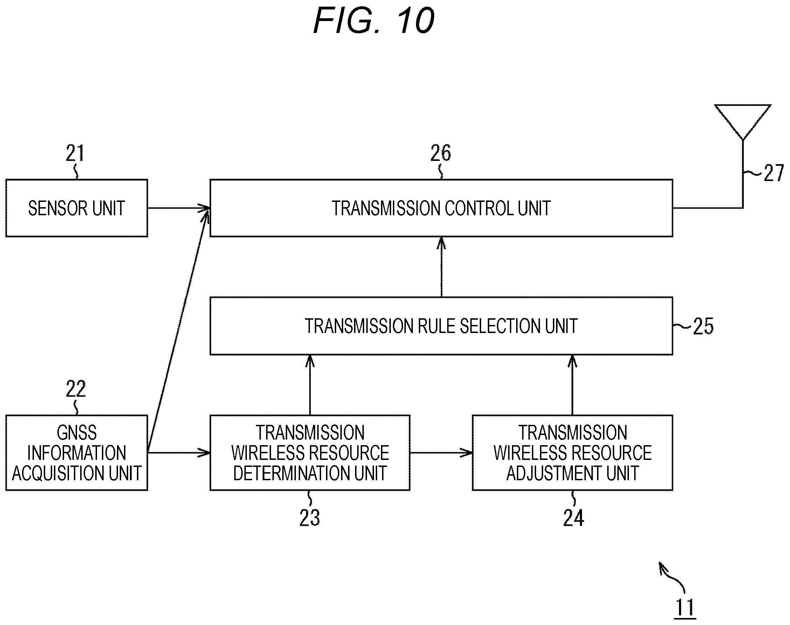

Fig. 10 is a block diagram illustrating an example configuration of the communication terminal 11 in Fig. 1.

In Fig. 10, the communication terminal 11 includes a sensor unit 21, a GNSS information acquisition unit 22, a transmission wireless resource determination unit 23, a transmission wireless resource adjustment unit 24, a transmission rule selection unit 25, a transmission control unit 26, and an antenna 27.

As described above with reference to Fig. 1, the sensor unit 21 is formed with a temperature sensor, a moisture sensor, and the like, for example, acquires information about temperature and moisture, and outputs the information to the transmission control unit 26.

The GNSS information acquisition unit 22 acquires location information and GNSS time information by acquiring a GNSS signal, and outputs the acquired information to the transmission wireless resource determination unit 23 and the transmission control unit 26.

The transmission wireless resource determination unit 23 determines the transmission frequency and the transmission time on the basis of the location information and the time information supplied from the GNSS information acquisition unit 22, and outputs the determined transmission frequency and transmission time to the transmission wireless resource adjustment unit 24 and the transmission rule selection unit 25.

Note that the transmission wireless resource determination unit 23 may determine the transmission time from the GNSS time, or may determine the transmission time by combining the GNSS time and its own identifier (the terminal ID, for example). By any of the determination methods, the same method as that on the reception side is set in advance or by performing an exchange with the reception side.

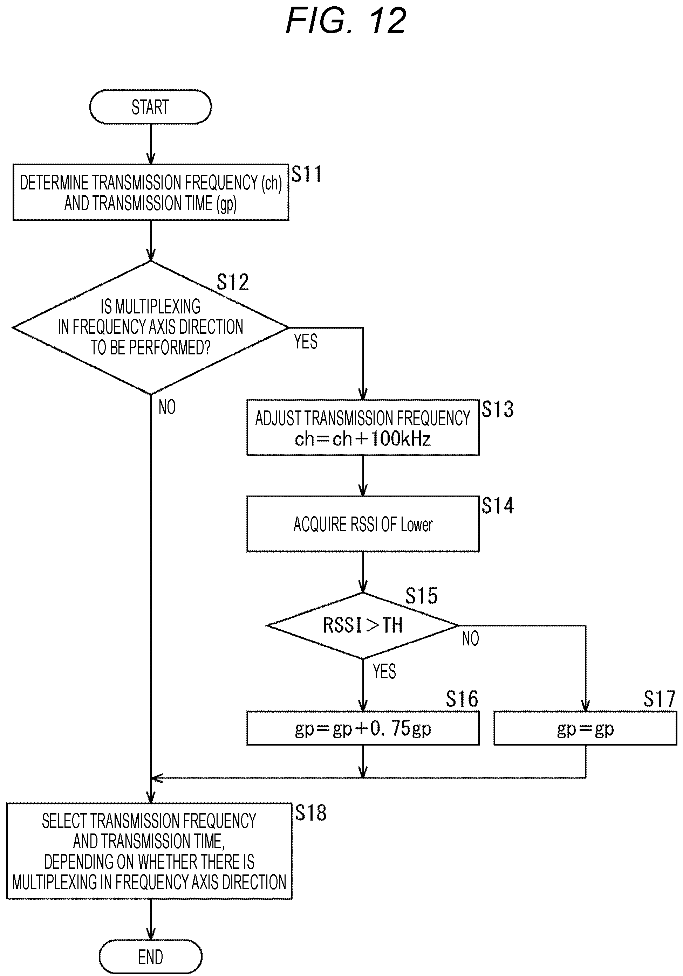

In a case where multiplexing is performed in the frequency axis direction, the transmission wireless resource adjustment unit 24 adjusts the transmission frequency and the transmission time on the basis of the transmission frequency and the transmission time supplied from the transmission wireless resource determination unit 23. The adjustment method will be described later with reference to Fig. 12. The transmission wireless resource adjustment unit 24 outputs the adjusted transmission frequency and transmission time to the transmission rule selection unit 25.

The transmission rule selection unit 25 determines whether to perform multiplexing in the frequency axis direction. The transmission rule selection unit 25 may make a determination on the basis of the contract of the terminal, or may make a determination by combining the GNSS time and its own identifier (terminal ID). Also, multiplexing in the frequency axis direction may be performed in a case where the 1 bit of the LSB of the bit string obtained as the GNSS time and the 1 bit of the LSB of the ID match, for example. By any of the determination methods, the same method as that on the reception side is set in advance or by performing an exchange with the reception side.

Because the position of the communication terminal 11 is fixed in some cases, it is possible to increase the resource efficiency by giving randomness to the determination as to whether to perform multiplexing in the frequency axis direction with the GNSS time or the GNSS time and its own identifier.

In a case where multiplexing is performed in the frequency axis direction, the transmission rule selection unit 25 selects the transmission frequency and transmission time adjusted by the transmission wireless resource adjustment unit 24, and outputs the results to the transmission control unit 26. In a case where multiplexing is not performed in the frequency axis direction, the transmission rule selection unit 25 selects the transmission frequency and transmission time determined by the transmission wireless resource determination unit 23, and outputs the results to the transmission control unit 26.

The transmission control unit 26 converts the information supplied from the sensor unit 21 into a radio signal, and transmits the converted radio signal via the antenna 27, using the transmission time and transmission frequency supplied from the transmission rule selection unit 25.

The antenna 27 transmits the radio signal supplied from the transmission control unit 26 to the communication device 12.

### <Configuration of Communication Device>

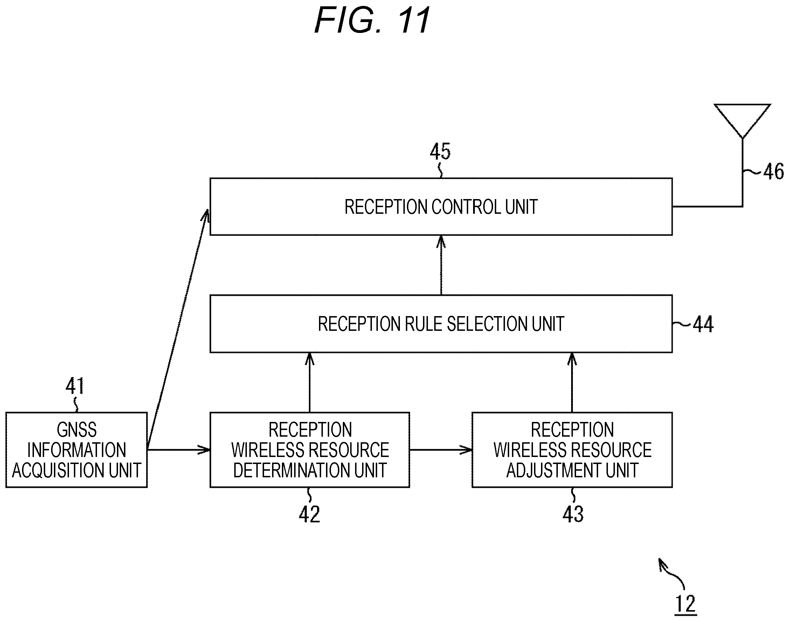

Fig. 11 is a block diagram illustrating an example configuration of the communication device 12 in Fig. 1.

In Fig. 11, the communication device 12 includes a GNSS information acquisition unit 41, a reception wireless resource determination unit 42, a reception wireless resource adjustment unit 43, a reception rule selection unit 44, a reception control unit 45, and an antenna 46.

Like the GNSS information acquisition unit 22 in **Fig.** 10 except for the difference between transmission and reception, the GNSS information acquisition unit 41 acquires location information and GNSS time information by acquiring a GNSS signal, and outputs the acquired information to the reception wireless resource determination unit 42 and the reception control unit 45.

Like the transmission wireless resource determination unit 23 in **Fig.** 10 except for the difference between transmission and reception, the reception wireless resource determination unit 42 determines the reception frequency and the reception time on the basis of the location information and the time information supplied from the GNSS information acquisition unit 41, and outputs the determined reception frequency and reception time to the reception wireless resource adjustment unit 43 and the reception rule selection unit 44.

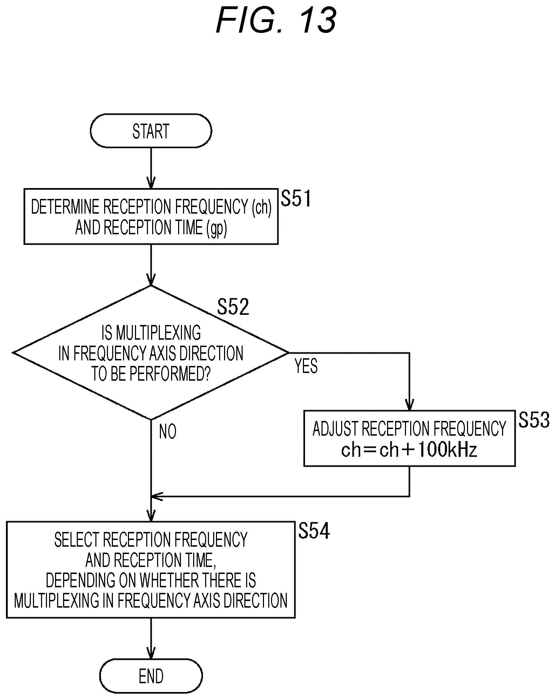

In a case where multiplexing is performed in the frequency axis direction, the reception wireless resource adjustment unit 43 adjusts the reception frequency on the basis of the reception frequency and the reception time supplied from the reception wireless resource determination unit 42. The adjustment method will be described later with reference to Fig. 13. The reception wireless resource adjustment unit 43 outputs the adjusted reception frequency and reception time to the reception rule selection unit **44.**

The reception rule selection unit 44 determines whether to perform multiplexing in the frequency axis direction, like the transmission rule selection unit 25 in Fig. 10 except for the difference between transmission and reception.

In a case where multiplexing is performed in the frequency axis direction, the reception rule selection unit 44 selects the reception frequency and reception time adjusted by the reception wireless resource adjustment unit 43, and outputs the results to the reception control unit 45. In a case where multiplexing is not performed in the frequency axis direction, the reception rule selection unit 44 selects the reception frequency and reception time determined by the reception wireless resource determination unit 42, and outputs the results to the reception control unit 45.

The reception control unit 45 receives the radio signal via the antenna 46, using the reception time and reception frequency supplied from the reception rule selection unit 44.

The antenna 46 supplies the radio signal transmitted from the communication terminal 11 to the reception control unit 45.

### <Transmission Process to Be Performed by Communication Terminal>

Fig. 12 is a flowchart for explaining a transmission process to be performed by the communication terminal 11 in Fig. 1.

In step S11, the transmission wireless resource determination unit 23 determines the transmission frequency (ch) and the transmission time (gp), on the basis of the rules of the existing chirp signals.

In step S12, the transmission rule selection unit 25 determines whether to perform multiplexing in the frequency axis direction. If it is determined in step S12 that multiplexing in the frequency axis direction is performed, the process moves on to step S13.

Note that, as described above, whether to perform multiplexing in the frequency axis direction may be determined on the basis of the contract of the terminal, or may be determined by combining the GPS time and its own identifier (terminal ID). For example, multiplexing in the frequency axis direction may be performed in a case where the 1 bit of the LSB of the bit string obtained as the GNSS time and the 1 bit of the LSB of the terminal ID match.

In step S13, the transmission wireless resource adjustment unit 24 adds +100 kHz to the transmission frequency determined in step S11. The adjustment value for the transmission frequency is not limited to this value. For example, a plurality of transmission frequencies may be adjusted.

In step S14, the transmission wireless resource adjustment unit 24 acquires the RSSI (Low-CH RSSI) of the channel on the lower frequency side. The channel on the lower frequency side is the channel of the transmission frequency determined in step S11.

In step S15, the transmission wireless resource adjustment unit 24 determines whether the acquired RSSI is equal to or higher than a threshold. For example, the threshold is -80 dBm.

If it is determined in step S15 that the RSSI is equal to or higher than the threshold, the process moves on to step S16.

In step S16, the transmission wireless resource adjustment unit 24 adjusts the transmission time gp. For example, a 0.75gp shift is performed to obtain a state similar to that in the case in Fig. 6 described above, and adjustment can be performed to minimize the interference with the channel on the lower frequency side.

Note that the interference with the chirp signal on the upper frequency side occurs in the latter half of the chirp signal on the upper frequency side. Accordingly, even if a signal exists on the upper frequency side before the start of transmission, there is almost no influence thereof, and a determination on the upper frequency side is unnecessary. This is because the signal to be transmitted is a chirp signal. This is because, for a chirp signal, transmission is performed at a low frequency at the start of transmission, and the frequency transitions to a higher frequency over time.

If it is determined in step S15 that the RSSI is smaller than the threshold, there are no chirp signals on the lower frequency side, or there is little interference even if there is a chirp signal on the lower frequency side. Therefore, the process moves on to step S17.

In step S17, the transmission wireless resource adjustment unit 24 does not adjust the transmission time gp.

After step S16 or S17, the process moves on to step S18.

If it is determined in step S12 that multiplexing in the frequency axis direction is not performed, on the other hand, the processing in steps S13 to S17 is skipped, and the process moves on to step S18.

In step S18, the transmission rule selection unit 25 selects the transmission frequency and the transmission time corresponding to the transmission rules.

In a case where multiplexing is performed in the frequency axis direction, for example, the transmission rule selection unit 25 selects the transmission frequency and transmission time adjusted by the transmission wireless resource adjustment unit 24, and outputs the results to the transmission control unit 26. In a case where multiplexing is not performed in the frequency axis direction, the transmission rule selection unit 25 selects the transmission frequency and transmission time determined by the transmission wireless resource determination unit 23, and outputs the results to the transmission control unit 26.

The transmission control unit 26 converts the sensor data supplied from the sensor unit 21 into a radio signal, and transmits the converted radio signal via the antenna 27, using the transmission time and transmission frequency supplied from the transmission rule selection unit 25.

After step S18, the transmission process in Fig. 12 comes to an end.

### <Reception Process to Be Performed by Communication Device>

Fig. 13 is a flowchart for explaining a reception process to be performed by the communication device 12 in Fig. 1.

Note that the process in steps S51 to S54 in Fig. 13 are the same as the process in steps S11 to S13 and S18 in Fig. 12, except for the difference between transmission and reception.

In step S51, the reception wireless resource determination unit 42 determines the reception frequency (ch) and the reception time (gp), on the basis of the rules of the existing chirp signals.

In step S52, the reception rule selection unit 44 determines whether to perform multiplexing in the frequency axis direction. If it is determined in step S52 that multiplexing in the frequency axis direction is performed, the process moves on to step S53.

In step S53, the reception wireless resource adjustment unit 43 adds +100 kHz to the reception frequency determined in step S51.

After step S53, the process moves on to step S54.

If it is determined in step S52 that multiplexing in the frequency axis direction is not performed, on the other hand, step S53 is skipped, and the process moves on to step S54.

In step S54, the transmission rule selection unit 25 selects the reception frequency and the reception time corresponding to the transmission rules.

In a case where multiplexing is performed in the frequency axis direction, for example, the reception rule selection unit 44 selects the reception frequency and reception time adjusted by the reception wireless resource adjustment unit 43, and outputs the results to the reception control unit 45. In a case where multiplexing is not performed in the frequency axis direction, the reception rule selection unit 44 selects the reception frequency and reception time determined by the reception wireless resource determination unit 42, and outputs the results to the reception control unit 45.

The reception control unit 45 receives the radio signal via the antenna 46, using the reception time and reception frequency supplied from the reception rule selection unit 44. In the communication device 12, a slight difference in the reception time is within a lead-in range, and a signal can be received even if there is a difference in the reception time, for example, within an interval in the grid time.

After step S54, the reception process in Fig. 13 comes to an end.

### <4. Others>

### <Effects of Present Technology>

In the present technology, control is performed to multiplex and transmit a plurality of chirp signals generated by performing chirp modulation on transmission data and shifting the transmission frequency between the center frequencies of adjacent transmission channels.

Also, in the present technology, control is performed to receive a plurality of multiplexed and transmitted chirp signals generated by performing chirp modulation on transmission data and shifting the reception frequency between the center frequencies of adjacent transmission channels.

According to the present technology, multiplexing in the frequency axis direction in which mutual interference is suppressed is possible, and the number of accommodated devices in the communication band can be increased.

According to the present technology, when multiplexing in the frequency axis direction is performed, it is possible to reduce interference with existing signals by adjusting the transmission time.

According to the present technology, it is possible to determine whether to perform multiplexing in a frequency axis for each piece of contract information or each transmission opportunity.

Note that, in the example described above, one new chirp signal multiplexed in the frequency axis direction is generated between existing chirp signals. However, the number of chirp signals is not limited to one, and a plurality of chirp signals may be generated.

### <Example Configuration of Computer>

The series of processes described above can be performed by hardware or by software. In a case where the series of processes is performed by software, a program included in the software is installed from a program recording medium into a computer incorporated into dedicated hardware, a general-purpose personal computer, or the like.

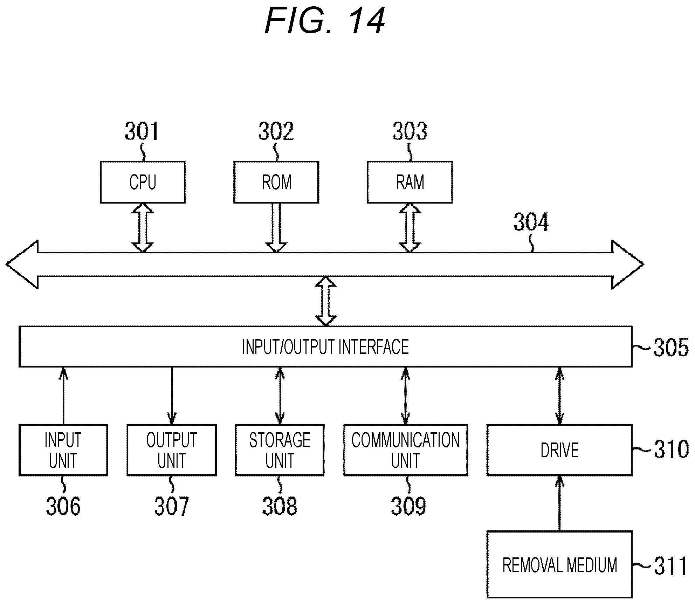

Fig. 14 is a block diagram illustrating an example configuration of the hardware of a computer that performs the series of processes described above according to a program.

A central processing unit (CPU) 301, a read only memory (ROM) 302, and a random access memory (RAM) 303 are connected to each other by a bus 304.

An input/output interface 305 is further connected to the bus 304. To the input/output interface 305, an input unit 306 including a keyboard, a mouse, and the like, and an output unit 307 including a display, a speaker, and the like are connected. Further, to the input/output interface 305, a storage unit 308 including a hard disk, a nonvolatile memory, and the like, a communication unit 309 including a network interface and the like, and a drive 310 that drives a removable medium 311 are connected.

In the computer designed as described above, the above-described series of processes is performed by the CPU 301 loading the program stored in the storage unit 308 into the RAM 303 via the input/output interface 305 and the bus 304 and executing the program, for example.

The program to be executed by the CPU 301 is recorded onto a removable medium 311, for example, or is provided through a wired or wireless transmission medium such as a local area network, the Internet, or digital broadcasting, and is installed into a storage unit 308.

Note that the program to be executed by the computer may be a program for performing processing in the chronological order described in the present specification, or may be a program for performing processing in parallel or at necessary timing such as when a call is made.

Note that, in the present specification, a system means an assembly of a plurality of components (devices, modules (parts), and the like), and it does not matter whether all the components are present in the same housing. Therefore, a plurality of devices that are housed in separate housings and are connected to each other via a network, and one device in which a plurality of modules is housed in one housing are both systems.

Further, the effects described in the present specification are merely examples and are not restrictive, and there may also be other effects.

Embodiments of the present technology are not limited to the embodiment described above, and various modifications can be made to it without departing from the scope of the present technology.

For example, the present technology may be embodied as cloud computing in which one function is shared by a plurality of devices via a network and is processed in cooperation.

Furthermore, each step described in the flowcharts described above can be carried out by one device, or can be shared and performed by a plurality of devices.

Moreover, in a case where a plurality of processes is included in one step, the plurality of processes included in the one step can be performed by one device, or can be performed by a plurality of devices in a shared manner.

### <Examples of Combinations of Configurations>

The present technology can also have the following configurations.
(1) A transmission device including
   a transmission control unit that performs control to multiplex and transmit a plurality of chirp signals generated by performing chirp modulation on transmission data and shifting a transmission frequency between center frequencies of adjacent transmission channels.
(2) The transmission device according to (1), in which
   the transmission control unit performs control to multiplex and transmit the plurality of chirp signals by shifting the transmission frequency between the center frequencies of the adjacent transmission channels and shifting a transmission time at predetermined time intervals.
(3) The transmission device according to (1) or (2), further including
   a transmission wireless resource adjustment unit that adjusts the transmission time.
(4) The transmission device according to (3), in which,
   when an RSSI of the transmission channel is higher than a threshold, the transmission wireless resource adjustment unit adjusts the transmission time.
(5) The transmission device according to (3), in which,
   when an RSSI of the transmission channel is higher than a threshold, the transmission wireless resource adjustment unit adjusts the transmission time within the predetermined time interval.
(6) The transmission device according to any one of (1) to (5), in which
   the transmission frequency is a center frequency at a time when two of the transmission channels are used in combination.
(7) The transmission device according to any one of (1) to (6), further including
   a sensor unit that acquires sensor data, in which
   the transmission data is the sensor data.
(8) A transmission method implemented by a transmission device, the transmission method including
   performing control to multiplex and transmit a plurality of chirp signals generated by performing chirp modulation on transmission data and shifting a transmission frequency between center frequencies of adjacent transmission channels.
(9) A reception device including
   a reception control unit that performs control to receive a plurality of multiplexed and transmitted chirp signals generated by performing chirp modulation on transmission data and shifting a reception frequency between center frequencies of adjacent reception channels.
(10) The reception device according to (9), in which
   the plurality of chirp signals is multiplexed and transmitted by shifting the reception frequency between the center frequencies of the adjacent reception channels and shifting a transmission time at predetermined time intervals.
(11) The reception device according to (9) or (10), in which
   the reception frequency is a center frequency at a time when two of the reception channels are used in combination.
(12) The reception device according to any one of (9) to (11),
   which is installed in a base station.
(13) A reception method implemented by a reception device, the reception method including
   performing control to receive a plurality of multiplexed and transmitted chirp signals generated by performing chirp modulation on transmission data and shifting a reception frequency between center frequencies of adjacent reception channels.

### REFERENCE SIGNS LIST

- 11: Communication terminal
- 21: Sensor
- 22: GNSS information acquisition unit
- 23: Transmission wireless resource determination unit
- 24: Transmission wireless resource adjustment unit
- 25: Transmission rule selection unit
- 26: Transmission control unit
- 27: Antenna
- 41: GNSS information acquisition unit
- 42: Reception wireless resource determination unit
- 43: Reception wireless resource adjustment unit
- 44: Reception rule selection unit
- 45: Reception control unit
- 46: Antenna

## Claims

1. A transmission device comprising
a transmission control unit that performs control to multiplex and transmit a plurality of chirp signals generated by performing chirp modulation on transmission data and shifting a transmission frequency between center frequencies of adjacent transmission channels.

2. The transmission device according to claim 1, wherein
the transmission control unit performs control to multiplex and transmit the plurality of chirp signals by shifting the transmission frequency between the center frequencies of the adjacent transmission channels and shifting a transmission time at predetermined time intervals.

3. The transmission device according to claim 1, further comprising
a transmission wireless resource adjustment unit that adjusts the transmission time.

4. The transmission device according to claim 3, wherein,
when an RSSI of the transmission channel is higher than a threshold, the transmission wireless resource adjustment unit adjusts the transmission time.

5. The transmission device according to claim 3, wherein,
when an RSSI of the transmission channel is higher than a threshold, the transmission wireless resource adjustment unit adjusts the transmission time within the predetermined time interval.

6. The transmission device according to claim 1, wherein
the transmission frequency is a center frequency at a time when two of the transmission channels are used in combination.

7. The transmission device according to claim 1, further comprising
a sensor unit that acquires sensor data, wherein
the transmission data is the sensor data.

8. A transmission method implemented by a transmission device, the transmission method comprising
performing control to multiplex and transmit a plurality of chirp signals generated by performing chirp modulation on transmission data and shifting a transmission frequency between center frequencies of adjacent transmission channels.

9. A reception device comprising
a reception control unit that performs control to receive a plurality of multiplexed and transmitted chirp signals generated by performing chirp modulation on transmission data and shifting a reception frequency between center frequencies of adjacent reception channels.

10. The reception device according to claim 9, wherein
the plurality of chirp signals is multiplexed and transmitted by shifting the reception frequency between the center frequencies of the adjacent reception channels and shifting a transmission time at predetermined time intervals.

11. The reception device according to claim 9, wherein
the reception frequency is a center frequency at a time when two of the reception channels are used in combination.

12. The reception device according to claim 9,
which is installed in a base station.

13. A reception method implemented by a reception device, the reception method comprising
performing control to receive a plurality of multiplexed and transmitted chirp signals generated by performing chirp modulation on transmission data and shifting a reception frequency between center frequencies of adjacent reception channels.
